## Europäisches Patentamt
## European Patent Office
## Office européen des brevets

(19)

(11) Numéro de publication: **0 281 455 B1**

(12) **FASCICULE DE BREVET EUROPEEN**

(45) Date de publication du fascicule du brevet:
**20.12.89**

(51) Int. Cl.⁴: **F02K 1/72**

(21) Numéro de dépôt: **88400334.4**

(22) Date de dépôt: **15.02.88**

(54) **Groupe moto-propulseur d'avion du type à ventilateur capoté équipé d'un inverseur de poussée à portes.**

(30) Priorité: **19.02.87 FR 8702121**

(43) Date de publication de la demande:
**07.09.88 Bulletin 88/36**

(45) Mention de la délivrance du brevet:
**20.12.89 Bulletin 89/51**

(84) Etats contractants désignés:
**DE GB**

(56) Documents cités:
**EP-A- 0 043 764**
**EP-A- 0 109 219**
**WO-A-84/01344**
**FR-A- 1 482 441**
**FR-A- 2 039 393**
**FR-A- 2 588 312**

(73) Titulaire: **SOCIETE DE CONSTRUCTION DES AVIONS HUREL-DUBOIS (société anonyme), 39 à 43 rue Grange Dame Rose, F-92360 Meudon-la-Foret(FR)**

(72) Inventeur: **Fournier, Alain, 34, rue Pierre Corby, F-92140 Clamart(FR)**
Inventeur: **Kennedy, John Francis, 8 Greenacre Drive, Walmer Deal Kent CT14 7UQ(GB)**

(74) Mandataire: **Sauvage, Renée, Cabinet Sauvage 100 bis, avenue de Saint-Mandé, F-75012 Paris(FR)**

ACTORUM AG

## Description

La présente invention concerne les ensembles de groupe moto-propulseur d'avion utilisant la technologie des inverseurs à portes basculantes.

Plus précisément, l'invention concerne un groupe moto-propulseur d'avion du type comportant, d'une part, une structure centrale fixe dans l'axe de laquelle est logé un générateur de gaz dont la tuyère délivre un jet chaud et, d'autre part, un ventilateur amont concentrique au générateur de gaz et tournant à l'intérieur d'un canal annulaire délimité par la structure fixe et par un capotage périphérique à double paroi porté par la structure fixe, ledit ventilateur assurant la circulation forcée d'un flux froid dans le canal pour améliorer les performances du groupe moto-propulseur, le capotage étant constitué de deux parties dont l'une amont est fixe en entoure le ventilateur, tandis que l'autre aval est mobile et coulisse parallèlement à l'axe du générateur, ledit groupe moto-propulseur comportant en outre un système d'inversion de poussée du flux froid qui est constitué de portes basculantes présentant respectivement des parois externe et interne qui, en position de portes escamotées, sont alignées respectivement avec les parois externe et interne du capotage.

Ce type de propulseur est appelé communément moteur à double flux à très grand taux de dilution et la structure centrale fixe à laquelle on se réfère plus haut est, en général, suspendue à un mât solidaire de l'avion.

La technologie des inverseurs à portes basculantes est connue, par exemple, d'après EP-A-0043764.

Selon l'invention, le groupe moto-propulseur est caractérisé en ce que lesdites portes sont logées dans des ouvertures de la partie coulissante du capotage, limitées par des parties annulaires réunies entre elles par des poutres, lesdites portes basculant autour de pivots logés dans lesdites poutres et chaque porte étant attelée par au moins une bielle à la structure fixe centrale de telle sorte que le recul de la partie coulissante du capotage provoque la rotation des portes, ce qui dégage des ouvertures et obture le canal annulaire, les portes dépassant radialement à l'extérieur du capotage.

On comprend donc que la présente invention se distingue de celle décrite dans EP-A-0043764 par le fait que, selon cette dernière, les parties fixe et mobile du capotage ne se trouvent pas juxtaposées en position de vol de croisière, mais séparées par les portes escamotées, les portes sont articulées autour d'axes fixes solidaires de la partie fixe du capotage, les portes ont uniquement un mouvement de rotation et non un mouvement complexe résultant d'une translation plus une rotation et, enfin, toute la structure de commande de basculement des portes est différente de celle utilisée selon la présente invention.

Dans le type de gorupe moto-propulseur visé par l'invention, le capotage périphérique est relié à la structure fixe par une couronne d'aubes fixes située entre le ventilateur amont et l'extrémité arrière du canal annulaire, la longueur de la zone du capotage située en aval de la couronne d'aubes fixes étant relativement courte. L'inversion du flux froid provenant du ventilateur ne peut être réalisée que dans cette zone aval du capotage. Or, la masse de flux à dévier est importante en raison de la section du canal annulaire et les dimensions du puits d'inversion devant être dégagé pour admettre ce flux dévié, doivent être également importantes et pratiquement s'étendre sur une longueur à peu près égale à la zone aval du capotage. Si l'on ménageait un tel puits d'inversion dans un capotage monobloc, on aboutirait à une fragilisation préjudiciable de cette partie du groupe moto-propulseur et à des impossibilités de maintenir les performances et caractéristiques requises tant pour la sécurité en vol que pour un bon freinage de l'avion lors de l'atterrissage.

La solution proposée par l'invention d'un capotage dont la partie arrière est susceptible de se déplacer vers l'arrière permet de résoudre ce problème de manière simple, économique et efficace, tandis que le système d'attelage par bielles des portes d'inverseurs réalise une commande d'ouverture et de fermeture de celles-ci automatique, sûre et de grande simplicité.

Par ailleurs la zone coulissante du capotage est montée sur des rails fixés au mât, lui-même solidaire de la voilure de l'avion, le déplacement en translation de la partie coulissante du capotage étant réalisé par un système d'actionnement logé pour partie dans la partie fixe amont du capotage et pour partie dans les poutres de la partie coulissante.

Le système d'actionnement peut consister, notamment, en des vérins à vis

En ce qui concerne les portes, leur axe de pivotement est situé sensiblement à la moitié de la longueur de celles-ci tandis que les bielles de basculement, une par porte de préférence, sont attelées au voisinage du bord arrière de chaque porte, c'est-à-dire en aval de l'axe de pivotement, le point d'attelage étant de préférence situé sensiblement au quart de la longueur de la porte à partir de son bord arrière.

Il est à noter qu'en position d'inverseur escamoté, l'espace entre l'arrière de la partie fixe du capotage et la partie annulaire aval de la partie coulissante du capotage a une longueur inférieure (environ inférieure de moitié) à la longueur totale de la porte de telle sorte que l'avant de celle-ci chevauche la partie fixe du capotage en prenant appui sur un joint d'étanchéité prévu sur le bord de cette partie fixe de capotage. Cette disposition est particulièrement avantageuse car elle constitue une sécurité. En effet, seule la partie aval de la porte est soumise à la surpression régnant dans le canal annulaire, ce qui tend à maintenir la porte fermée.

D'autres avantages et caractéristiques de l'invention apparaîtront dans la description qui suit donnée à titre d'exemple non limitatif en référence aux dessins annexés dans lesquels :

- la figure 1 est une vue générale en perspective du groupe moto-propulseur de l'invention équipé du système d'inversion en position active ;
- la figure 2 est une vue en coupe partielle montrant le système d'inversion dans ses positions escamotée et active ;

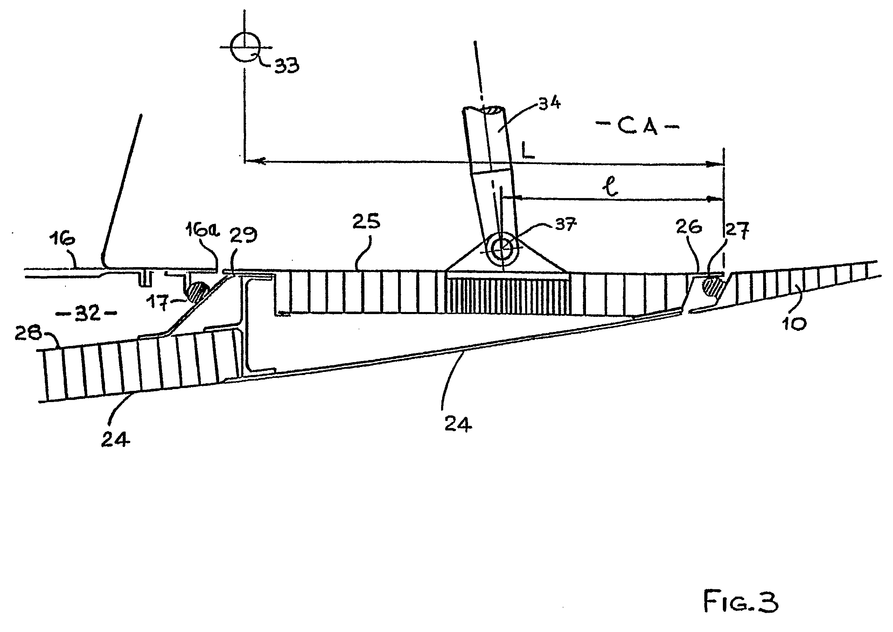

- la figure 3 est une vue de détail du joint d'étanchéité de porte ;
- la figure 4 représente en coupe le détail du système d'entraînement de la partie mobile du capotage ;

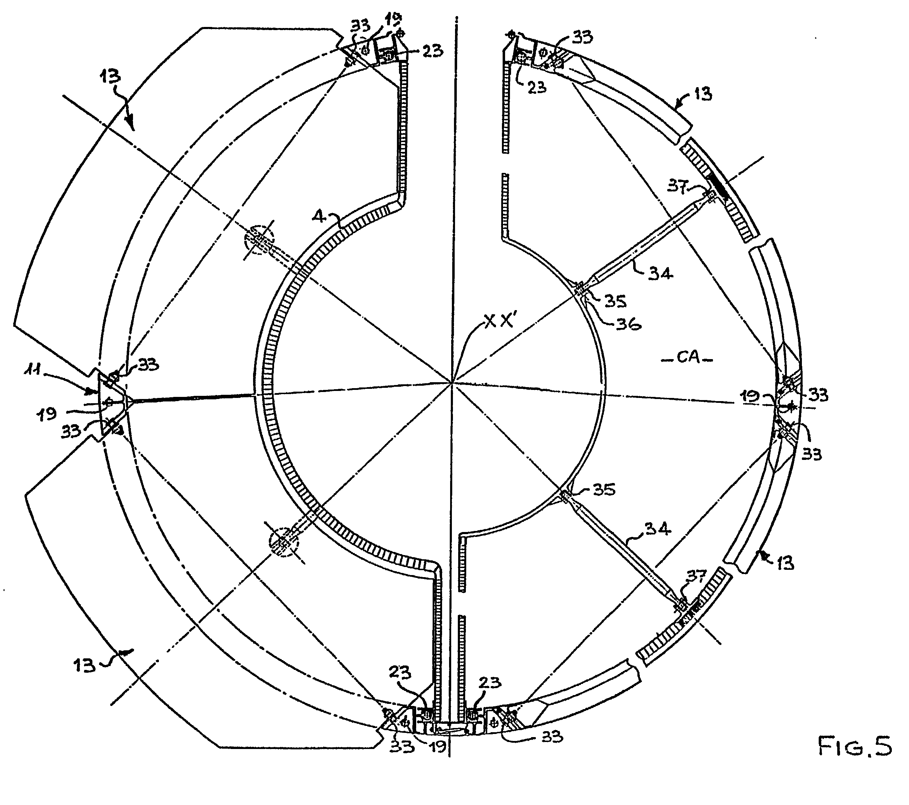

- la figure 5 est une vue schématique de l'arrière avec des coupes partielles représentant à gauche les portes escamotées et à droite les portes déployées.

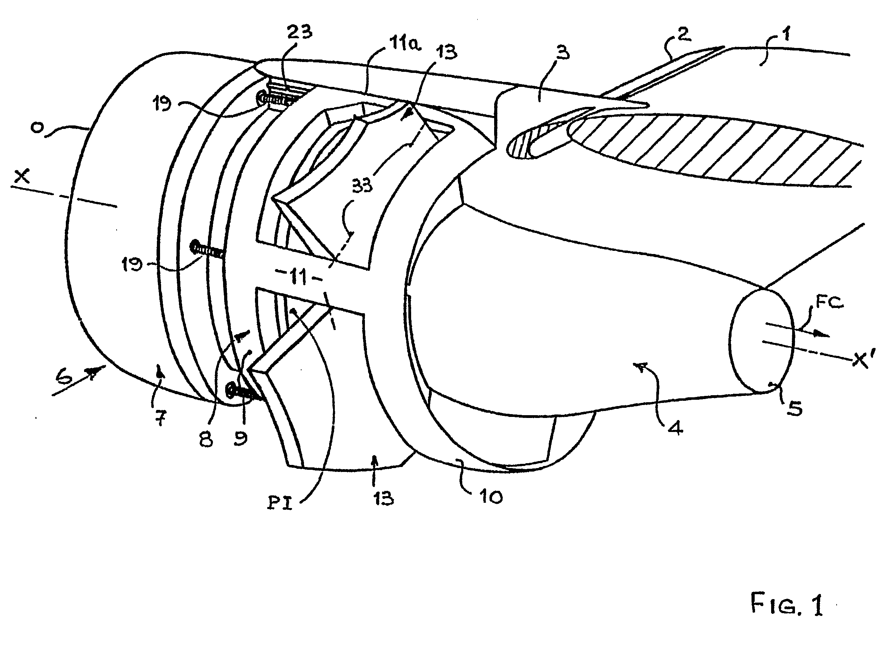

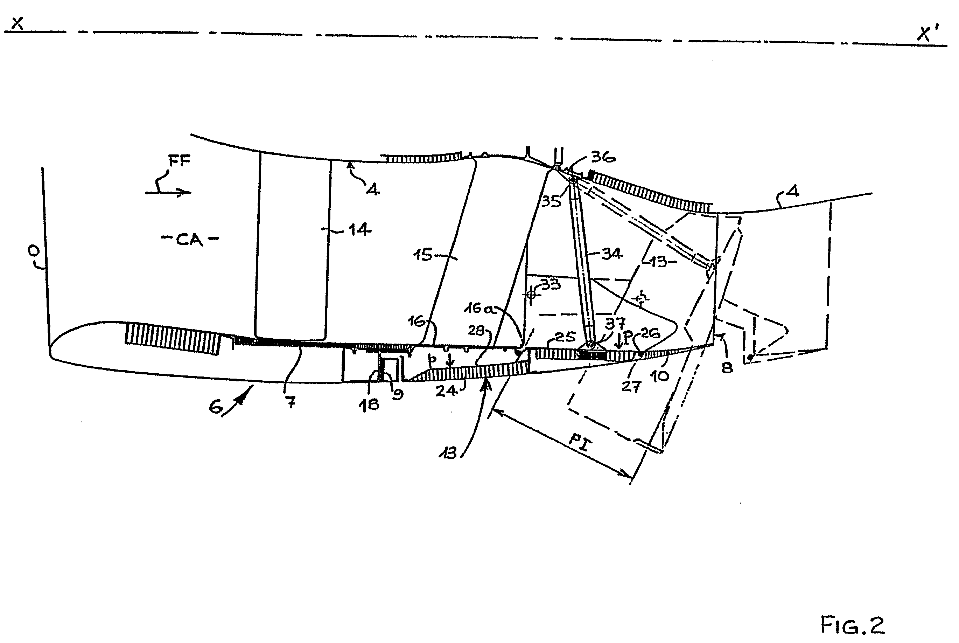

A la figure 1, on a représenté en 1 une partie de l'aile d'un avion avec son beo avant 2, sous laquelle est fixé, par l'intermédiaire d'un mât support 3, le groupe moto-propulseur constitué d'une structure fixe centrale 4 suspendue au mât 3 et contenant le générateur de gaz (non représenté) situé dans l'axe x-x' de la structure fixe 4 et un capotage désigné de façon générale en 6 entourant la structure fixe en étant écarté de celle-ci de façon que soit ménagé entre eux un canal annulaire CA, (dont l'orifice d'entrée est indiqué en 0) dans lequel est destiné à circuler en flux froid FF sous l'action d'un ventilateur 14 à pales tournantes concentriques à la structure fixe (voir également la figure 2). En 5, on a représenté la tuyère d'éjection des gaz chauds FC provenant du générateur de gaz.

Le capotage 6 est constitué d'une partie amont fixe 7 rattachée à la structure fixe 4 par une couronne d'aubes fixes 15 montées sur la paroi 16 interne de la partie fixe du capotage, et d'une partie aval mobile désignée de façon générale en 8 et coulissant sur deux rails 23 prévus dans le mât 3.

La partie de capotage coulissante 8 est formée de deux parties annulaires 9 et 10 réunies entre elles par des poutres 11 et 11a parallèles à l'axe x-x' du moteur, ménageant entre elles des ouvertures dans lesquelles sont logées les portes basculantes 13 d'un système d'inversion à portes. Dans l'exemple représenté, les portes sont au nombre de quatre.

Comme on le voit en particulier à la figure 2, la paroi interne 16 de la partie fixe 7 de capotage s'étend vers l'aval au-delà des aubes fixes 15 jusqu'au bord désigné en 16a, tandis que la paroi externe de cette partie fixe 7 est interrompue en amont du bord 16a au niveau du cadre annulaire 18 qui rigidifie cette partie fixe 7.

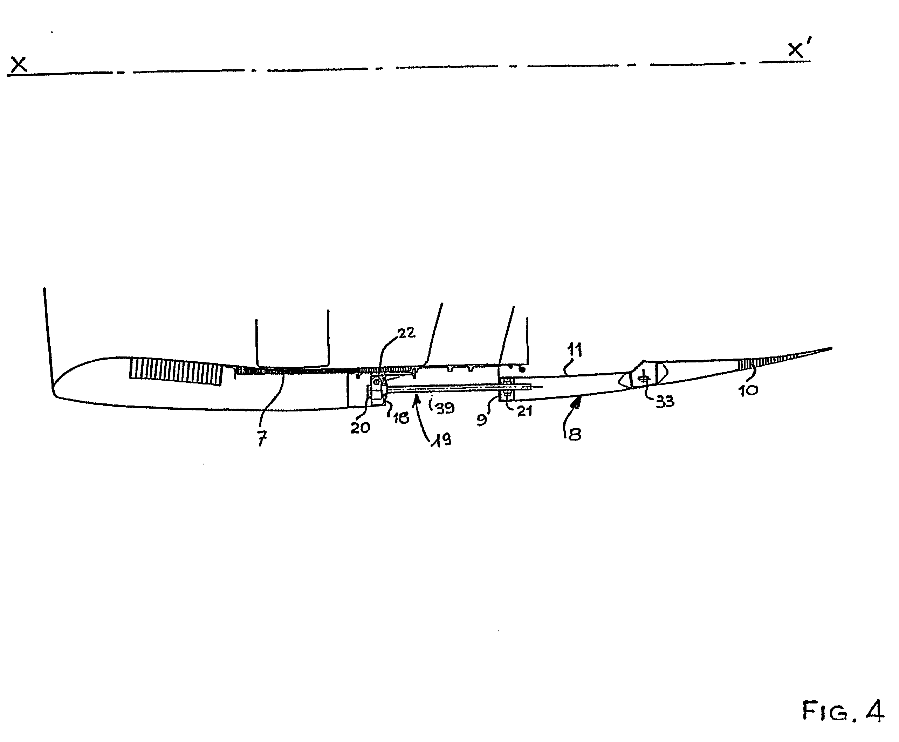

Comme le montre la figure 4, le déplacement en translation de la partie coulissante 8 du capotage est commandé par un système d'entraînement constitué dans l'exemple représenté, sans qu'il s'agisse là d'un moyen limitatif, par une série de vérins à vis 19. La tête 20 de chaque vérin est logée dans le cadre 18, accouplée à un système d'entraînement 22 en rotation et immobilisée en translation. Le corps de vis traverse la partie annulaire 9 de la partie coulissante de capotage et s'étend dans une des poutres 11. Un écrou 21, bloqué en rotation est traversé par la vis 39. Les vérins dont la manoeuvre est synchronisée s'étendent à peut près parallèlement à l'axe x-x' du groupe moto-propulseur.

Chaque porte 13, en forme générale de portion de tronc de cône, comporte une paroi externe 24 qui, comme on le voit sur la figure 2, s'aligne avec la paroi extérieure du capotage en position de porte fermée et une paroi interne en forme de dos d'âne, c'est-à-dire présentant deux inclinaisons.

La partie arrière 25 de cette paroi interne (représentant approximativement la moitié de la longueur de la porte) est destinée à prendre place exactement dans le prolongement de la paroi interne 16 du capotage, le bord arrière 26 de la porte venant en appui contre le joint d'étanchéité 27 porté par la partie arrière 10 du capotage 8.

La partie avant 28 de la porte est destinée à chevaucher, en position de porte fermée, la zone aval 16 de la partie fixe du capotage et s'étend jusqu'à la partie annulaire 9.

Au niveau de l'intersection des parties 25 et 28 de la paroi interne de la porte est prévu un épaulement 29 qui, en position de porte fermée, vient en appui contre le joint d'étanchéité 17 de telle sorte que l'espace 32 avoisinant l'avant 28 de la porte se trouve isolé du canal CA. De la sorte, en position de porte fermée représentée en trait continu à la figure 2, la pression P appliquée sur la paroi arrière 25 de la porte est la pression régnant dans le canal CA, tandis que le pression p appliquée sur l'avant 28 de la porte est celle qui règne à l'extérieur du groupe moto-propulseur, c'est-à-dire une pression plus faible.

Il en résulte que la porte est sollicitée par cette différence de pression dans sa position fermée, ce qui élimine tout risque d'ouverture intempestive en vol de la porte.

Chaque porte basculante 13 est articulée autour de deux pivots 33 portés par des poutres 11 et 11a et une bielle 34 est articulée d'une part en 35 dans une chape 36 solidaire de la structure fixe 4 et d'autre part en 37 à la paroi interne 25 de la porte. De préférence il existe une seule bielle par porte située dans le plan médian de celle-ci et s'étendant à travers le canal CA. L'axe d'articulation 35 est situé au voisinage de la couronne d'aubes fixes, tandis que l'axe 36 est situé à peu près au quart (I) de la longueur de la porte à partir de son bord arrière 26.

Par ailleurs l'axe d'articulation de la porte passant par les pivots 33 se trouve sensiblement à une distance L correspondant à la moitié de longueur de la porte à partir de son bord arrière 26.

Grâce à l'ensemble de ces dispositions, en commande d'inversion de poussée, les vérins 19 font reculer la partie coulissante du capotage dans la position représentée en traits interrompus à la figure 2, ce que entraîne automatiquement, grâce aux bielles 34, une rotation des portes 13 qui viennent occuper la position en trait interrompu en obturant le canal CA, en dégageant dans le capotage un puits d'inversion de longueur PI importante et en faisant saillie vers l'extérieur pour guider le flux dévié.

## Revendications

1- Groupe moto-propulseur d'avion du type comportant, d'une part, une structure centrale fixe dans l'axe de laquelle est logé un générateur de gaz dont la tuyère délivre un jet chaud et, d'autre part, un ventilateur amont concentrique au générateur de gaz et tournant à l'intérieur d'un canal annulaire délimité par la structure fixe et par un capotage périphérique (6) à double paroi porté par la structure fixe, ledit ventilateur assurant la circulation forcée d'un flux froid dans le canal pour améliorer les performances du groupe moto-propulseur, le capotage (6) étant constitué de deux parties dont l'une amont (7) est fixe et entoure le ventilateur, tandis que l'autre aval (8) est mobile et coulisse parallèlement à l'axe (X-X') du générateur, ledit groupe moto-propulseur comportant en outre un système d'inversion de poussée du flux froid qui est constitué de portes basculantes (13) présentant respectivement des parois externe et interne qui, en position de portes escamotées, sont alignées respectivement avec les parois externe et interne du capotage (6), caractérisé en ce que lesdites portes (13) sont logées dans des ouvertures de la partie coulissante (8) du capotage, limitées par des parties annulaires (9 et 10) réunies entre elles par des poutres (11-11a), lesdites portes (13) basculant autour de pivots (33) logés dans lesdites poutres (11-11a) et chaque porte (13) étant attelée par au moins une bielle (34) à la structure fixe centrale (4) de telle sorte que le recul de la partie coulissante (8) du capotage provoque la rotation des portes (13), ce qui dégage des ouvertures (PI) et obture le canal annulaire (CA), les portes dépassant radialement à l'extérieur du capotage.

2- Groupe moto-propulseur selon la revendication 1, caractérisé en ce que le déplacement en translation de la partie coulissante (8) du capotage est réalisé par un système d'actionnement (19) logé pour partie dans la partie fixe amont (7) du capotage et pour partie dans les poutres (11) de la partie coulissante (8).

3- Groupe moto-propulseur selon la revendication 1, caractérisé en ce que le point d'attelage (37) de la bielle (34) à la porte est situé sensiblement au quart de la longueur de celle-ci à partir de son bord arrière (26).

4- Groupe moto-propulseur selon la revendication 1, caractérisé en ce que l'axe de pivotement (33) des portes est situé sensiblement à la moitié de la longueur de celles-ci.

5- Groupe moto-propulseur selon la revendication 1, dans lequel la partie fixe (7) du capotage est reliée à la structure centrale fixe par une série d'aubes fixes (15) situées en aval du ventilateur (14), caractérisé en ce que, en position d'inverseur escamoté, c'est-à-dire de portes (13) alignées avec le capotage, la partie arrière (25) des portes (13) obture l'espace entre le bord arrière (16a) de la partie fixe du capotage et la partie annulaire aval (10) de la partie coulissante (8) du capotage, tandis que la partie avant (28) des portes recouvre une zone (16) de la partie fixe du capotage.

6- Groupe moto-propulseur selon la revendication 5, caractérisé en ce que le bord (16a) de la partie fixe du capotage est muni d'un joint d'étanchéité (17) contre lequel vient en appui un épaulement (29) prévu dans la face interne de la porte.

7- Groupe moto-propulseur selon les revendications 5 et 6, caractérisé en ce que, en position d'inverseur escamoté, la partie arrière (25) de la face interne de la porte, s'aligne avec la paroi interne (16) de la partie fixe du capotage en assurant une continuité matérielle du canal annulaire (CA).

8- Groupe moto-propulseur selon les revendications 5, 6 et 7, caractérisé en ce qu'en position d'inverseur escamoté, la pression (P) régnant dans le canal annulaire (CA) s'exerce sur la partie arrière (25) de la porte alors que sur la partie avant (28) de la porte, isolée par le joint d'étanchéité (17), règne une pression plus faible (p), cette différence de pression agissant dans le sens du maintien des portes en position fermée.

## Patentansprüche

1. Flugzeugstrahltriebswerksanordnung, enthaltend einerseits einen zentralen festen Aufbau in der Achse, in der ein Gasgenerator angeordnet ist, dessen Düse einen heißen Strahl abgibt, und andererseits ein Gebläse stromaufwärts des und konzentrisch zum Gasgenerator und der sich im Innern eines ringförmigen Kanals dreht, der von dem festen Aufbau und von einer doppelwandigen Umfangsverkleidung (6) begrenzt ist, die von dem festen Aufbau gehalten wird, wobei das Gebläse einen Zwangsumlauf einer kalter Strömung in dem Kanal sicherstellt, um die Leistungsfähigkeit der Strahltriebwerksanordnung zu verbessern, die Verkleidung (6) aus zwei Teilen besteht, von denen ein stromaufwärtiges (7) feststeht und das Gebläse umgibt, während das andere stromabwärtige (8) beweglich ist und parallel zur Achse (X–X') des Generators gleitet, die Strahltriebwerksanordnung weiterhin ein Schubumkehrsystem der kalten Strömung enthält, das von ausklappbaren Türen (13) gebildet wird, die jeweils Außen- und Innenwände aufweisen, die im eingeklappten Zustand der Türen jeweils mit den Außen- und Innenwänden der Umkleidung (6) fluchten, dadurch gekennzeichnet, daß die genannten Türen (13) in Öffnungen des gleitenden Teils (8) der Umkleidung angeordnet sind, die von ringförmigen Abschnitten (9, 10) begrenzt sind, die untereinander durch Stege (11–11a) verbunden sind, wobei die Türen (13) um Schwenklager (33) schwenken, die in den genannten Stegen (11–11a) angeordnet sind und jede Türe (13) durch wenigstens eine Verbindungsstange (34) mit dem festen zentralen Aufbau (4) derart verbunden ist, daß der Rückschub des gleitenden Teils (8) der Umkleidung die Drehung der Türen (13) hervorruft, was die genannten Öffnungen (PI) freilegt und den ringförmigen Kanal (CA) verschließt, wobei die Türen gegenüber der Verkleidung nach außen vorstehen.

2. Triebwerksanordnung nach Anspruch 1, dadurch gekennzeichnet, daß die translatorische Verstellung des gleitenden Teils (8) der Umkleidung durch ein Betätigungssystem (19) bewirkt wird, das teilweise in dem festen, stromaufwärtigen Teil (7) der Umkleidung und teilweise in den Stegen (11) des gleitenden Teils (8) angeordnet ist.

3. Triebwerksanordnung nach Anspruch 1, dadurch gekennzeichnet, daß der Ankoppelpunkt (37) der Verbindungsstange (34) an der Tür im wesentlichen bei einem Viertel der Längserstreckung derselben, ausgehend von ihrem hinteren Rand (26), gelegen ist.

4. Triebwerksanordnung nach Anspruch 1, dadurch gekennzeichnet, daß die Schwenkachse (33) der Türen im wesentlichen in der Mitte der Längserstreckung derselben liegt.

5. Triebwerksanordnung nach Anspruch 1, bei welcher das feste Teil (7) der Umkleidung mit dem zentralen festen Aufbau durch eine Reihe von festen Schaufeln (15) verbunden ist, die stromabwärts des Gebläses (14) liegen, dadurch gekennzeichnet, daß in eingeklappter Stellung des Umkehrers, d.h. im mit der Umkleidung fluchtenden Zustand der Türen (13), der hintere Abschnitt (25) der Türen (13) den Zwischenraum zwischen dem hinteren Rand (16a) des festen Teils der Umkleidung und dem stromabwärtigen ringförmigen Abschnitt (10) des gleitenden Teils (8) der Umkleidung verschließt, während der vordere Abschnitt (28) der Türen eine Zone (16) des festen Teils der Umkleidung bedeckt.

6. Triebwerksanordnung nach Anspruch 5, dadurch gekennzeichnet, daß der Rand (16a) des festen Teils der Umkleidung mit einer Dichtung (17) versehen ist, gegen die sich eine Schulter (29) anlegt, die an der Innenfläche der Tür vorgesehen ist.

7. Triebwerksanordnung nach den Ansprüchen 5 und 6, dadurch gekennzeichnet, daß in eingeklappter Stellung des Umkehrers der hintere Abschnitt (25) der Innenfläche der Tür mit der Innenwand (16) des festen Teils der Umkleidung fluchtet und eine körperliche Kontinuität des ringförmigen Kanals (CA) dabei herstellt.

8. Triebwerksanordnung nach den Ansprüchen 5, 6 und 7, dadurch gekennzeichnet, daß in der eingeklappten Stellung des Umkehrers der Druck (P), der in dem ringförmigen Kanal (CA) herrscht, auf den hinteren Abschnitt (25) der Tür einwirkt, während auf den vorderen Abschnitt (28) der Tür, der durch die Dichtung (17) getrennt ist, ein schwächerer Druck (p) einwirkt, wobei diese Druckdifferenz in einem Sinne wirkt, daß die Türen in geschlossener Stellung gehalten werden.

**Claims**

1. Aircraft propulsive power unit of the type comprising, on the one hand, a fixed central structure along the axis of which is housed a gas generator whose nozzle delivers a hot jet and, on the other hand, an upstream blower concentric with the gas generator and rotating inside an annular channel defined by the fixed structure and by a peripheral fairing (6) with double wall carried by the fixed structure, said blower providing the forced circulation of a cold flow in the channel for improving the performance of the power unit, the fairing (6) being formed of two parts, the upstream one (7) of which is fixed and surrounds the blower, whereas the downstream one (8) is mobile and slides parallel to the axis (X–X') of the generator, said propulsive power limit further comprising a system for reversing the thrust of the cold flow which is formed of pivoting doors (13) having respectively external and internal walls which, in the retracted position of the doors, are aligned respectively with the external and internal walls of the fairing (6), characterized in that said doors are housed in openings of the sliding part (8) of the fairing, defined by annular parts (9 and 10) joined together by beams (11–11a), said doors (13) pivoting about pivots (33) housed in said beams (11–11a) and each door (13) being coupled by at least one link (34) to the fixed central structure (4) so that the backward movement of the sliding part (8) of the fairing causes rotation of the doors (13), which uncovers openings (PI) and closes the annular channel (CA), the doors projecting radially outwardly of the fairing.

2. Propulsive power unit according to claim 1, characterized in that translational movement of the sliding part (8) of the fairing is provided by an actuating system (19) housed partially in the fixed upstream part (7) of the fairing and partially in the beams (11) of the sliding part (8).

3. Propulsive power unit according to claim 1, characterized in that the coupling point (37), of the link (34) to the door is situated substantially at a quarter of the length thereof from its rear edge (26).

4. Propulsive power unit according to claim 1, characterized in that pivoting axis (33) of the doors is situated substantially halfway therealong.

5. Propulsive power unit according to claim 1, in which the fixed part (7) of the fairing is connected to the fixed central structure by a series of fixed blades (15) situated downstream of the blower (14), characterized in that, in the retracted reversal position, i.e. with the doors (13) aligned with the fairing, the rear part (25) of the doors (13) closes a space between the rear edge (16a) of the fixed part of the fairing and the annular downstream part (10) of sliding part (8) of the fairing, whereas the front part (28) of the doors covers a zone (16) of the fixed part of the fairing.

6. Propulsive power unit according to claim 3, characterized in that the edge (16a) of the fixed fairing part is provided with a seal (17) against which a shoulder (29), provided in the internal face of the door, is engageable by abutment.

7. Propulsive power unit according to claims 5 and 6, characterized in that, in the retracted reversal position, the rear part (25) of the internal face of the door is aligned with the internal wall (16) of the fixed fairing part providing material continuity of the annular channel (CA).

8. Propulsive power unit according to claims 5, 6 and 7, characterized in that in the retracted reversal position, the pressure (P) reigning in the annular channel (CA) is exerted on the rear part (25) of the door whereas, on the front part (28) of the door, isolated by the seal (17), there reigns a lower pressure (p), this pressure difference acting in the direction of holding the doors in the closed position.

FIG. 1

FIG.2

EP 0 281 455 B1

FIG.3

EP 0 281 455 B1

FIG. 4

EP 0 281 455 B1

FIG.5

EP 0 281 455 B1